# FASCICULE DE BREVET EUROPEEN

(11) **EP 0 953 607 B1**
(45) Date de publication et mention de la délivrance du brevet: **14.09.2005**
(21) Numéro de dépôt: 99401034.6
(22) Date de dépôt: 28.04.1999
(51) Int. Cl.: C08L 95/00

(54) **Procédé de préparation d'un bitume modifié par un élastomère**
Verfahren zur Herstellung eines elastomermodifizierten Bitumen
Process for the preparation of an elastomer modified bitumen

(30) Priorité: 28.04.1998 FR 9805305
(43) Date de publication de la demande: 03.11.1999
(73) Titulaire: Eurovia, 92500 Rueil-Malmaison (FR)
(72) Inventeur: Brûle, Bernard, 93800 Epinay sur Seine (FR); Maze, Michel, 91410 Corbeuse (FR); Soliman, Samir, 78160 Marly-Le Roi (FR); Sibaud, Claude, 95110 Sannois (FR)
(74) Mandataire: Warcoin, Jacques

(56) Documents cités:
- EP-A- 0 458 386
- WO-A-97/44396

## Description

La présente invention se rapporte à un procédé de préparation d'un bitume modifié par un polymère élastomère, en l'absence d'agent compatibilisant.

Il est connu de préparer des bitumes modifiés par un polymère élastomère, l'objectif étant d'améliorer d'une manière générale les propriétés mécaniques et rhéologiques du bitume.

Les différents processus de modification des bitumes de l'art antérieur impliquent le chauffage du mélange bitume-polymère élastomère-agent compatibilisant, à une température inférieure à 200° C et en général de l'ordre de 180° C.

Les procédés connus impliquent en outre l'utilisation d'un agent compatibilisant, tel que les huiles aromatiques (mélanges physiques) ou des produits à base de soufre (vulcanisation in situ). Par "agent compatibilisant", on entend un produit permettant d'améliorer la stabilité au stockage par augmentation de l'aromaticité du bitume de base, tel qu'une huile fortement aromatique, non volatile, d'origine pétrolière ou carbochimique.

Or, la présence d'huiles aromatiques dans le bitume ainsi modifié présente des inconvénients majeurs liés à la toxicité de ce type d'agent compatibilisant. Par ailleurs, si les produits à base de soufre présentent également l'inconvénient d'être relativement toxiques, leur présence dans un bitume ainsi modifié entraîne en outre des problèmes importants de corrosion en particulier des outils destinés à la mise en oeuvre du bitume.

Le document EP-A-0 458 386 décrit un procédé de préparation de compositions bitume - polymère destinées aux applications routières comprenant une étape de prémélange menée à des températures allant de 160 à 190°C, sous forte agitation, par exemple à l'aide d'un mélangeur à turbine. suivie d'une étape de stabilisation à des températures allant de 200 à 250°C pour une durée variant de 15 heures à 45 minutes.

On a maintenant trouvé de manière tout à fait surprenante et inattendue qu'il est possible de modifier un bitume par un polymère élastomère, sans devoir ajouter un quelconque agent compatibilisant, en soumettant le mélange bitume-polymère élastomère à des températures nettement supérieures à celles des procédés connus.

Ceci est d'autant plus surprenant qu'on pouvait plutôt s'attendre à ce que l'utilisation de températures élevées pour modifier un bitume ait une incidence néfaste sur les performances du bitume modifié, en particulier du fait d'une oxydation éventuelle du bitume.

La présente invention a ainsi pour objet un procédé de préparation d'un bitume modifié par un polymère élastomère, caractérisé par le fait qu'il comprend l'étape consistant à former un mélange d'un bitume et d'au moins un polymère élastomère, sous agitation, à une température comprise entre 210 et 300° C, en procédant d'abord à un prémélange du bitune avec ledit polymère à une température comprise entre 210 et 300°C, puis en introduisant le prémélange ainsi obtenu dans un réacteur mélangeur du type turbodéliteur pendant un temps suffisant à une température comprise entre 210 et 300°C pour obtenir un mélange pratiquement homogène et une modification pratiquement complète du bitume, le mélange ne comprenant pas d'agent compatibilisant, le mélange réactionnel et le prémélange étant formés pendant un temps total compris entre 1 et 30 minutes.

Le polymère élastomère utilisé dans le procédé selon l'invention peut être tout polymère élastomère approprié compte tenu de la température mise en oeuvre lors du mélange avec le bitume, et notamment les copolymères élastomères à insaturations éthyléniques, aux motifs alternés, statistiques ou séquencés c'est-à-dire biséquencés, triséquencés voire polyséquencés, et d'architecture linéaire, ramifiée ou en étoile.

Parmi ces copolymères élastomères, on préfère utiliser ceux constitués par le monomère styrène selon une proportion inférieure à 50 % en poids, et de préférence selon une proportion inférieure ou égale à 40 % en poids, par rapport à la masse moléculaire moyenne en poids du copolymère, le reste du copolymère étant constitué par au moins un monomère comportant plus d'une insaturation éthylénique, telle que le butadiène ou l'isoprène, la masse moléculaire en moyenne en poids de ces copolymères élastomères étant comprise entre 50 000 et 600 000.

Par "masse moléculaire moyenne en poids" d'un polymère donné, on entend la valeur obtenue par la technique de diffusion de lumière.

Plus particulièrement, parmi les polymères élastomères définis ci-dessus, on préfère utiliser un polymère élastomère choisi dans le groupe constitué par les copolymères styrène-butadiène statistiques de masse moléculaire moyenne en poids comprise entre 250 000 et 600 000 , les copolymères triséquencés styrène-butadiène-styrène linéaires, ramifiés ou en étoile de masse moléculaire moyenne en poids comprise entre 50 000 et 300 000, les copolymères triséquencés styrène-isoprène-styrène linéaires ayant un indice de fluidité à chaud compris entre 0,5 et 200, et un mélange de ces derniers.

Par "indice de fluidité à chaud" (ou Melt Flow Index) on entend la valeur obtenue en effectuant la mesure selon la norme ASTM .

La proportion en polymère élastomère utilisée dans le mélange formé selon l'invention est notamment comprise entre 1 et 20 % en poids, et de préférence entre 3 et 12 % en poids, par rapport au poids total du mélange.

Le bitume, qui est le principal constituant du mélange à former selon l'invention, peut être du bitume routier, semi-soufflé, de désasphaltage ou du bitume obtenu directement comme résidu de la distillation de pétrole brut.

Ce bitume peut notamment être de grade 20/30, 35/50, 50/70 70/100 ou 180/220. Il peut être utilisé sous forme d'un seul grade ou d'un mélange de ces derniers dans des proportions qui peuvent varier en fonction de l'application particulière recherchée. Par bitume, on entend bien entendu également tout liant bitumineux constitué essentiellement d'un bitume tel que décrit ci-dessus et modifié de manière connue. De préférence, le procédé selon l'invention s'applique à un bitume pur à usage routier, tel que défini par les normes NF T 65 000 et NF T 65 001.

On peut former le mélange selon l'invention en continu ou en discontinu, dans tout réacteur mélangeur approprié permettant à la fois un chauffage et un malaxage du mélange bitume-polymère élastomère.

Avantageusement, l'opération de mélange est réalisée en deux temps. On procède d'abord à un prémélange du bitume et du polymère dans un prémélangeur du type à vis d'archimède. Le bitume est amené à une température d'environ 250° C et le polymère à une température voisine de l'ambiante (c'est-à-dire comprise entre 5°C et 40°C), ce qui conduit à un prémélange atteignant une température d'environ 230° C. Ce prémélange alimente ensuite un réacteur mélangeur du type turbodéliteur.

Comme cela se comprend aisément par l'homme du métier, le prémélange consiste à disperser le polymère dans le bitume majoritaire, avant l'entrée dans le réacteur mélangeur de type turbodéliteur.

Comme déjà précisé ci-dessus, le turbodéliteur est un réacteur mélangeur approprié permettant à la fois un chauffage et un malaxage du mélange réactionnel bitume-polymère élastomère. Le turbodéliteur est en outre un réacteur mélangeur approprié en ce qu'il permet avantageusement de minimiser le temps de séjour dans le réacteur mélangeur en augmentant la vitesse de réaction entre le bitume et le polymère. On peut en particulier utiliser pour réaliser la présente invention le turbodéliteur Modèle DEL 1000 S de la société Pierre GUERIN (79210 MAUZE-FR).

Le procédé selon l'invention est caractérisé par le fait que l'on procède au prémélange dans un prémélangeur approprié pour obtenir un prémélange sous forme d'une dispersion pratiquement homogène du polymère élastomère dans le bitume (à une température comprise entre 210 et 300° C) avantageusement en utilisant un prémélangeur du type à vis d'Archimède, et en ce que l'on introduit ensuite le prémélange ainsi formé pour réaction dans le réacteur mélangeur de type turbodéliteur (à une température comprise entre environ 210 et environ 300° C) pour obtenir un produit de réaction pratiquement homogène à partir du prémélange.

Il est en particulier à la portée de l'homme du métier utilisant ses connaissances générales de déterminer le caractère pratiquement homogène d'une dispersion d'un polymère dans un bitume, en contrôlant par exemple de manière visuelle l'état de dispersion pratiquement homogène des particules de polymère, ayant une taille s'exprimant en millimètre, dans le bitume. Dès l'obtention de ce caractère homogène, on introduit, avantageusement en continu, le prémélange dans le réacteur mélangeur de type turbodéliteur pour une réaction et donc une modification du bitume par le polymère jusqu'à obtention d'un produit de réaction pratiquement homogène.

Plus particulièrement, dans le réacteur mélangeur de type turbodéliteur, on obtient une dispersion homogène sensiblement plus fine, soit en restant en phase continue bitume lors de faibles dosages en polymère, soit avec inversion de phase, c'est à dire passage en une phase continue polymère présentant une phase bitume dispersée, dans les cas de bitumes plus richement additivés. L'inversion de phase dans le domaine des bitumes additivés d'un polymère est un phénomène bien connu de l'homme du métier. Quel que soit le cas (inversion de phase ou non) on entend par "produit de réaction pratiquement homogène" selon l'invention un produit de réaction sous forme d'une dispersion sensiblement plus fine que celle du prémélange, de la phase polymère (respectivement de bitume) ayant une taille s'exprimant en micromètre dans une phase continue de bitume (respectivement de polymère) ce produit de réaction ayant été formé par interactions physico-chimiques entre le polymère et le bitume au moyen du réacteur turbodéliteur. Il est donc également tout à fait à la portée de l'homme du métier de déterminer à l'aide de ses connaissances générales, le caractère pratiquement homogène ou non de la dispersion sensiblement plus fine obtenue à la sortie du réacteur mélangeur de type turbodéliteur et donc de maîtriser ainsi l'état d'avancement de la réaction de modification du bitume.

La température à laquelle le mélange et éventuellement le prémélange bitume-polymère élastomère est formé constitue un paramètre essentiel du procédé selon l'invention. De préférence, cette température est comprise entre 220 et 260° C.

En particulier, on forme le prémélange à une température d'au plus 230° C (et donc comprise entre 210 et 230° C et de préférence entre 220 et 230° C).

Par ailleurs, le mélange réactionnel dans le réacteur mélangeur de type turbodéliteur est avantageusement formé à une température d'au moins 230° C, et plus avantageusement encore à une température d'au moins 250° C, à partir du prémélange.

Le temps total pendant lequel on forme le mélange et éventuellement le prémélange comme indiqué ci-dessus, selon l'invention, doit être suffisant non seulement pour l'obtention d'un mélange pratiquement homogène mais aussi, et surtout, pour une modification pratiquement complète du bitume. Il est bien entendu à la portée de l'homme du métier de déterminer ce temps nécessaire pour obtenir une modification pratiquement complète du bitume, compte tenu de la proportion de polymère élastomère utilisée, notamment en effectuant quelques essais de mélanges et éventuellement de prémélanges et en déterminant à chaque fois l'état d'avancement de la réaction de modification du bitume par le polymère élastomère. Afin de déterminer l'état d'avancement de la modification du bitume, on peut par exemple utiliser les techniques de laboratoire classiques permettant de caractériser les propriétés physiques et rhéologiques des bitumes polymères.

En particulier, on forme le mélange réactionnel dans le réacteur mélangeur turbodéliteur pendant un temps suffisamment court pour éviter une dégradation thermique du mélange.

De préférence, on forme le mélange (réactionnel) et éventuellement le prémélange bitume-polymère élastomère selon l'invention pendant un temps total compris entre 1 et 30 minutes.

Selon un mode de réalisation préféré de l'invention, le bitume utilisé pour être mélangé et éventuellement prémélangé au polymère élastomère est préalablement chauffé, sous agitation, à une température comprise entre 220 et 300° C.

Par ailleurs, le polymère élastomère peut d'une manière avantageuse être utilisé à sa température de stockage pour former le mélange (réactionnel) et éventuellement le prémélange avec le bitume, c'est-à-dire en particulier à une température comprise entre 5 et 40° C.

Le bitume modifié ainsi obtenu par le procédé selon l'invention est refroidi, sous agitation, jusqu'à une température comprise entre 150 et 180° C, avant son utilisation. Pour faire refroidir le bitume modifié, on peut simplement le laisser refroidir en maintenant l'agitation.

Selon un mode de réalisation particulièrement avantageux du procédé selon l'invention, on réalise en continu le prémélange puis le mélange réactionnel dans le réacteur mélangeur de type turbodéliteur.

On va maintenant décrire la présente invention à l'aide d'exemples qui ne sont donnés qu'à titre illustratifs et en aucun cas comme pouvant limiter la portée de l'invention.

### EXEMPLE 1 : Préparation d'un bitume modifié par un copolymère styrène-butadiène-styrène.

### 1) Préparation du bitume modifié

Dans un pré-mélangeur en continu du type vis d'archimède commercialisé par la Société Caloflux, on introduit un bitume de base, de grade 180/220, tel que commercialisé par la Société TOTAL, ce bitume ayant été préalablement chauffé à une température d'environ 250° C.

On introduit simultanément dans le pré-mélangeur, à raison de 8% en poids par rapport au poids total du mélange avec le bitume chauffé à environ 250° C, un copolymère tri-séquencé styrène-butadiène-styrène linéaire constitué par environ 30 % en poids du monomère styrène, par rapport à la masse moléculaire moyenne en poids qui est de 110 000, sous forme de poudre, tel que commercialisé par la Société ENICHEM sous la dénomination "EUROPRENE SOLT 6302". Ce copolymère élastomère a une température d'environ 15° C lors de son introduction dans le pré-mélangeur.

La température du prémélange ainsi formé en continu est ainsi réglée à environ 230° C. Ce prémélangeur alimente directement un turbodéliteur pendant environ 8 minutes. On utilisera avantageusement un turbodéliteur Modèle DEL 1000 S de la société Pierre GUERIN (79210 MAUZE-FR). Le débit à la sortie du turbodéliteur est d'environ 7,5 tonnes/heures de bitume modifié.

Le bitume modifié ainsi obtenu est laissé à refroidir dans un réservoir de stockage, sous agitation, jusqu'à une température comprise entre 150 et 170° C, pour ensuite y être maintenu à cette température, sous agitation.

### 2) Caractéristiques physiques et propriétés mécaniques avant et après vieillissement du bitume modifié.

On mesure certaines caractéristiques physiques et propriétés mécaniques des bitumes modifiés comme décrit ci-dessus, avant et après un vieillissement simulé de ces derniers.

Le vieillissement est simulé par "RTFOT" (Norme T 66032) et par l'essai "PAV" Pressure Ageing Vessel selon la norme AASHTO-PP193.

Les résultats sont regroupés dans le tableau 1 ci-dessous.

La pénétrabilité à 25° C, exprimée en dixième de millimètres, a été obtenue en utilisant la méthode de mesure régie par la norme NF T 66-004. Le point de ramollissement, exprimé en degrés Celsius, a été obtenu selon la norme NF T 66-008.

La pénétrabilité résiduelle est le pourcentage obtenu en rapportant la pénétrabilité à 25° C après vieillissement RTFOT à la pénétrabilité à 25° C avant vieillissement RTFOT. La mesure delta TBA, exprimée en degrés Celsius, représente le vieillissement du bitume polymère.

La température isomodule, exprimée en degrés Celsius, a été obtenue en utilisant un rhéomètre dynamique suivant la norme AASHTO-TP5.

La température isomodule 300 MPa 60s a été obtenue selon la norme AASHTO-TP1.

Cette température isomodule correspond à la température à laquelle on obtient un module de rigidité d'un barreau de bitume de 300 Mpa sous une charge de 60 secondes.

Enfin, les propriétés mécaniques en traction directe ont été obtenues selon la norme AFNOR XPT66-038.

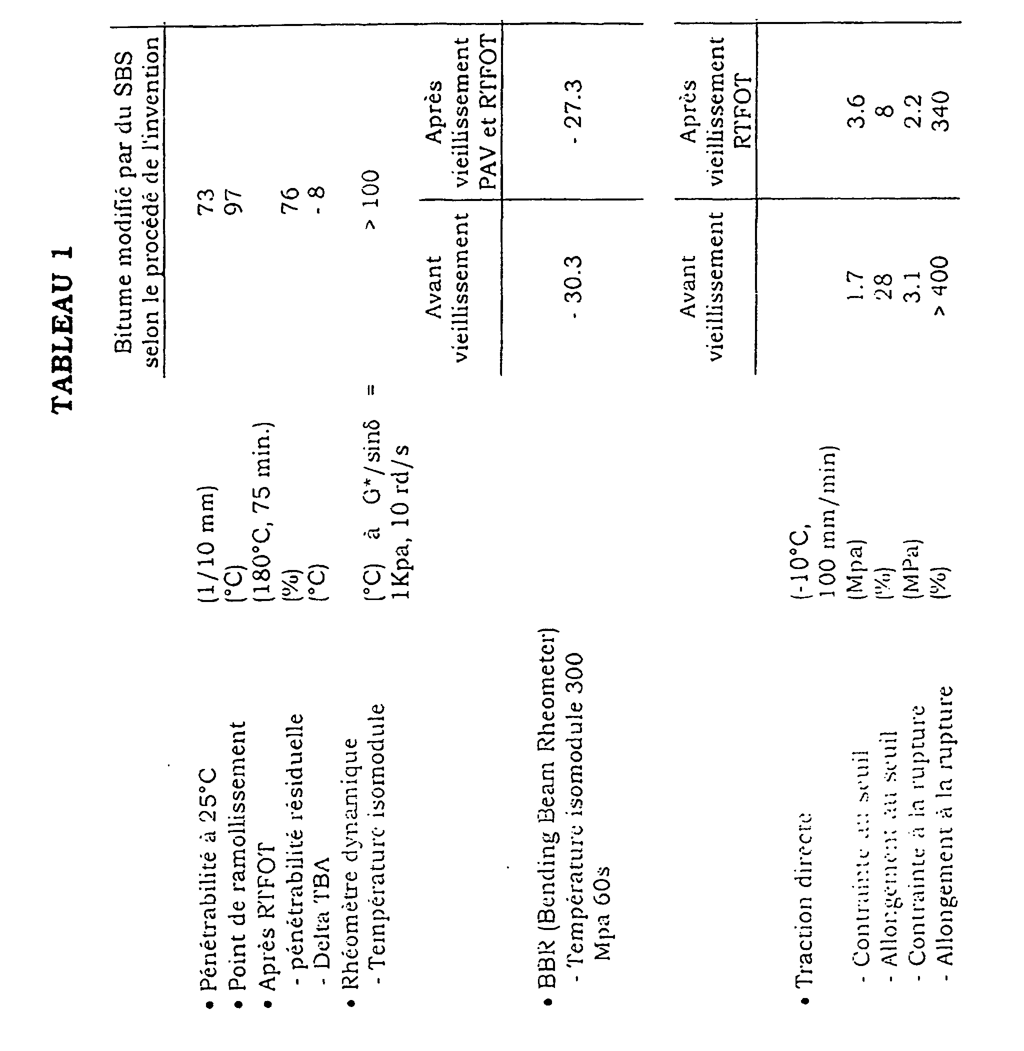

## Revendications

1. Procédé de préparation d'un bitume modifié par un polymère élastomère, **caractérisé par le fait qu'**il comprend l'étape consistant à former un mélange d'un bitume et d'au moins un polymère élastomère, sous agitation, à une température comprise entre 210 et 300° C, en procédant d'abord à un prémélange du bitume avec ledit polymère à une température comprise entre 210 et 300°C, puis en introduisant le prémélange ainsi obtenu dans un réacteur mélangeur du type turbodéliteur, pendant un temps suffisant à une température comprise entre 210 et 300°C pour obtenir un mélange pratiquement homogène et une modification pratiquement complète du bitume, le mélange ne comprenant pas d'agent compatibilisant, le mélange réactionnel et le prémélange étant formés pendant un temps total compris entre 1 et 30 minutes.

2. Procédé selon la revendication 1, **caractérisé par le fait que** l'on procède au prémélange dans un prémélangeur approprié pour obtenir un prémélange sous forme d'un dispersion pratiquement homogène du polymère élastomère dans le bitume, et en ce que l'on introduit ensuite le prémélange ainsi formé pour réaction dans le réacteur mélangeur de type turbodéliteur, pour obtenir un produit de réaction pratiquement homogène à partir du prémélange.

3. Procédé selon la revendication 1 ou 2, **caractérisé en ce que** l'on procède au prémélange du bitume avec ledit polymère dans un prémélangeur du type à vis d'archimède.

4. Procédé selon l'une quelconque des revendications 1 à 3, **caractérisé par le fait que** le polymère élastomère est choisi parmi les copolymères élastomères à insaturations éthyléniques, aux motifs alternés, statistiques ou séquencés, et d'architecture linéaire, ramifiée ou en étoile, ayant une masse moléculaire moyenne en poids comprise entre 50 000 et 600 000 et étant constitués par le monomère styrène selon une proportion inférieure à 50 % en poids, par rapport à la masse moléculaire moyenne en poids du copolymère, le reste du copolymère étant constitué par au moins un monomère comportant plus d'une insaturation éthylénique.

5. Procédé selon la revendication 4, **caractérisé par le fait que** le polymère élastomère est constitué par le monomère styrène selon une proportion inférieure ou égale à 40 % en poids, par rapport à la masse moléculaire moyenne en poids du copolymère.

6. Procédé selon la revendication 4 ou 5, **caractérisé par le fait que** le polymère élastomère est choisi dans le groupe constitué par les copolymères styrène-butadiène statistiques de masse moléculaire moyenne en poids comprise entre 250 000 et 600 000, les copolymères triséquencés styrène-butadiène-styrène linéaires, ramifiés ou en étoile de masse moléculaire moyenne en poids comprise entre 50 000 et 300 000, les copolymères triséquencés styrène-isoprène-styrène linéaires ayant un indice de fluidité à chaud compris entre 0,5 et 200, et un mélange de ces derniers.

7. Procédé selon l'une quelconque des revendications précédentes, **caractérisé par le fait que** le polymère élastomère est présent dans le mélange et dans le prémélange en une proportion comprise entre 1 et 20 % en poids, par rapport au poids total du mélange et par rapport au poids total du prémélange.

8. Procédé selon la revendication 7, **caractérisé par le fait que** le polymère élastomère est présent dans le mélange et dans le prémélange en une proportion comprise entre 3 et 12 % en poids, par rapport au poids total du mélange et par rapport au poids total du prémélange.

9. Procédé selon l'une quelconque des revendications précédentes **caractérisé par le fait que** le bitume est un bitume pur à usage routier tel que défini par les normes NF T 65 000 et NF T 65 001.

10. Procédé selon l'une quelconque des revendications précédentes, **caractérisé par le fait que** l'on forme le mélange et éventuellement le prémélange à une température comprise entre 220 et 260° C.

11. Procédé selon l'une quelconque des revendications précédentes, **caractérisé par le fait que** l'on forme le prémélange à une température d'au plus 230°C.

12. Procédé selon l'une quelconque des revendications précédentes, **caractérisé par le fait que** l'on forme le mélange réactionnel dans le réacteur mélangeur du type turbodéliteur à une température d'au moins 230°C, à partir du prémélange.

13. Procédé selon la revendication 12, **caractérisé par le fait que** l'on forme le mélange réactionnel dans le réacteur mélangeur de type turbodéliteur à une température d'au moins 250°C, à partir du prémélange.

14. Procédé selon l'une quelconque des revendications précédentes, **caractérisé par le fait que** l'on forme le mélange réactionnel dans le réacteur mélangeur turbodéliteur pendant un temps suffisamment court pour éviter une dégradation thermique du mélange.

15. Procédé selon l'une quelconque des revendications précédentes, **caractérisé par le fait que** l'on réalise en continu le prémélange puis le mélange réactionnel dans le réacteur mélangeur de type turbodéliteur.

16. Procédé selon l'une quelconque des revendications précédentes, **caractérisé par le fait que** le bitume utilisé pour être mélangé au polymère élastomère est préalablement chauffé, sous agitation, à une température comprise entre 220 et 300°C.

17. Procédé selon l'une quelconque des revendications précédentes, **caractérisé par le fait que** le polymère élastomère utilisé pour être mélangé au bitume est préalablement réglé à une température comprise entre 5 et 40°C.

18. Procédé selon l'une quelconque des revendications précédentes, **caractérisé par le fait qu'**il comprend en outre l'étape consistant à laisser refroidir le bitume modifié obtenu, sous agitation jusqu'à une température comprise entre 150 et 180°C.

## Patentansprüche

1. Verfahren zur Herstellung eines Bitumens, das durch ein elastomeres Polymer modifiziert ist, **dadurch gekennzeichnet, dass** es den Schritt umfasst, der darin besteht, unter Rühren bei einer Temperatur zwischen 210 und 300°C einschließlich eine Mischung eines Bitumens und mindestens eines elastomeren Polymers zu bilden, indem man zuerst ein Vormischen des Bitumens mit dem Polymer bei einer Temperatur zwischen 210 und 300°C einschließlich vornimmt, dann die so erhaltene Vormischung über eine ausreichende Zeit bei einer Temperatur zwischen 210 und 300°C einschließlich in einen Mischreaktor der Art Turbodeliteur einführt, um eine praktisch homogene Mischung und eine praktisch vollständige Modifikation des Bitumens zu erhalten, wobei die Mischung kein Kompatibilisierungsmittel umfasst, wobei die Reaktionsmischung und die Vormischung während einer Gesamtzeit zwischen 1 und 30 Minuten einschließlich gebildet werden.

2. Verfahren nach Anspruch 1, **dadurch gekennzeichnet, dass** man das Vormischen in einem geeigneten Vormischer vornimmt, um eine Vormischung in Form einer praktisch homogenen Dispersion des elastomeren Polymers in dem Bitumen zu erhalten, und dass man anschließend die so gebildete Vormischung für die Reaktion in den Mischreaktor der Art Turbodeliteur einführt, um ein praktisch homogenes Reaktionsprodukt aus der Vormischung zu erhalten.

3. Verfahren nach Anspruch 1 oder 2, **dadurch gekennzeichnet, dass** man das Vormischen des Bitumens mit dem Polymer in einem Vormischer der Art mit archimedischer Schraube vornimmt.

4. Verfahren nach irgendeinem der Ansprüche 1 bis 3, **dadurch gekennzeichnet, dass** das elastomere Polymer ausgewählt ist aus elastomeren Copolymeren mit ethylenischen Unsättigungen mit alternierenden, statistischen oder Block-Struktureinheiten und mit linearem, verzweigtem oder sternförmigem Aufbau, die ein Gewichtsmittel des Molekulargewichts zwischen 50.000 und 600.000 einschließlich aufweisen und aus Styrol-Monomer zu einem Anteil von weniger als 50 Gew.-% bestehen, bezogen auf das Gewichtsmittel des Molekulargewichts des Copolymers, wobei der Rest des Copolymers aus mindestens einem Monomer besteht, das mehr als eine ethylenische Unsättigung umfasst.

5. Verfahren nach Anspruch 4, **dadurch gekennzeichnet, dass** das elastomere Polymer aus dem Styrol-Monomer zu einem Anteil unterhalb von oder gleich 40 Gew.-% besteht, bezogen auf das Gewichtsmittel des Molekulargewichts des Copolymers.

6. Verfahren nach Anspruch 4 oder 5, **dadurch gekennzeichnet, dass** das elastomere Polymer ausgewählt ist aus der Gruppe bestehend aus statistischen Styrol-Butadien-Copolymeren mit einem Gewichtsmittel des Molekulargewichts zwischen 250.000 und 600.000 einschließlich, linearen verzweigten oder sternförmigen Triblock-Styrol-Butadien-Styrol-Copolymeren mit einem Gewichtsmittel des Molekulargewichts zwischen 50.000 und 300.000 einschließlich, linearen Triblock-Styrol-Isopren-Styrol-Copolymeren mit einer Weichheitszahl in der Wärme zwischen 0,5 und 200 einschließlich und einer Mischung dieser Letztgenannten.

7. Verfahren nach irgendeinem der vorangehenden Ansprüche, **dadurch gekennzeichnet, dass** das elastomere Polymer in der Mischung und in der Vormischung zu einem Anteil zwischen 1 und 20 Gew.-% einschließlich vorliegt, bezogen auf das Gesamtgewicht der Mischung und bezogen auf das Gesamtgewicht der Vormischung.

8. Verfahren nach Anspruch 7, **dadurch gekennzeichnet, dass** das elastomere Polymer in der Mischung und in der Vormischung zu einem Anteil zwischen 3 und 12 Gew.-% einschließlich vorliegt, bezogen auf das Gesamtgewicht der Mischung und bezogen auf das Gesamtgewicht der Vormischung.

9. Verfahren nach irgendeinem der vorangehenden Ansprüche, **dadurch gekennzeichnet, dass** das Bitumen ein reines Bitumen für die Straßenverwendung ist, wie durch die Normen NF T 65 000 und NF T 65 001 definiert.

10. Verfahren nach irgendeinem der vorangehenden Ansprüche, **dadurch gekennzeichnet, dass** man die Mischung und gegebenenfalls die Vormischung bei einer Temperatur zwischen 220 und 260°C einschließlich bildet.

11. Verfahren nach irgendeinem der vorangehenden Ansprüche, **dadurch gekennzeichnet, dass** man die Vormischung bei einer Temperatur von höchstens 230°C bildet.

12. Verfahren nach irgendeinem der vorangehenden Ansprüche, **dadurch gekennzeichnet, dass** man die Reaktionsmischung in dem Mischreaktor der Art Turbodeliteur bei einer Temperatur von mindestens 230°C aus der Vormischung bildet.

13. Verfahren nach Anspruch 12, **dadurch gekennzeichnet, dass** man die Reaktionsmischung in dem Mischreaktor der Art Turbodeliteur bei einer Temperatur von mindestens 250°C aus der Vormischung bildet.

14. Verfahren nach irgendeinem der vorangehenden Ansprüche, **dadurch gekennzeichnet, dass** man die Reaktionsmischung in dem Turbodeliteur-Mischreaktor über eine ausreichend kurze Zeit bildet, um einen thermischen Abbau der Mischung zu vermeiden.

15. Verfahren nach irgendeinem der vorangehenden Ansprüche, **dadurch gekennzeichnet, dass** man das Vormischen, dann das Reaktionsmischen in dem Mischreaktor der Art Turbodeliteur kontinuierlich durchführt.

16. Verfahren nach irgendeinem der vorangehenden Ansprüche, **dadurch gekennzeichnet, dass** das Bitumen, das verwendet wird, um mit dem elastomeren Polymer gemischt zu werden, zuvor unter Rühren auf eine Temperatur zwischen 220 und 300°C einschließlich erwärmt wird.

17. Verfahren nach irgendeinem der vorangehenden Ansprüche, **dadurch gekennzeichnet, dass** das elastomere Polymer, das verwendet wird, um mit dem Bitumen gemischt zu werden, zuvor auf eine Temperatur zwischen 5 und 40°C einschließlich eingestellt wird.

18. Verfahren nach irgendeinem der vorangehenden Ansprüche, **dadurch gekennzeichnet, dass** es darüber hinaus einen Schritt umfasst, der darin besteht, das erhaltene modifizierte Bitumen unter Rühren bis auf eine Temperatur zwischen 150 und 180°C einschließlich abkühlen zu lassen.

## Claims

1. Process for preparing a bitumen modified with an elastomeric polymer, **characterized in that** it comprises the step consisting in forming a mixture of a bitumen and at least one elastomeric polymer, with stirring, at a temperature between 210 and 300°C, by first premixing the bitumen with said polymer at a temperature between 210 and 300°C, then by introducing the resultant premix into a mixer-reactor of the turbodisintegrator type, for a time sufficient, at a temperature between 210 and 300°C, to give a virtually homogeneous mixture and virtually complete modification of the bitumen, the mixture containing no compatibilizer and the reaction mixture and the premix being formed during a total time of between 1 and 30 minutes.

2. Process according to Claim 1, **characterized in that** the premixing is performed in a premixer suitable for obtaining a premix in the form of a virtually homogeneous dispersion of the elastomeric polymer in the bitumen, and **in that** subsequently the premix thus formed is introduced, for reaction, into the mixer-reactor of turbodisintegrator type, to give a virtually homogeneous reaction product from the premix.

3. Process according to Claim 1 or 2, **characterized in that** the premixing of the bitumen with said polymer is performed in a premixer of the Archimedes screw type.

4. Process according to any one of Claims 1 to 3, **characterized in that** the elastomeric polymer is selected from ethylenically unsaturated elastomeric copolymers containing alternating, random or block units and having a linear, branched or star architecture, having a weight-average molecular mass of between 50 000 and 600 000 and consisting of the monomer styrene in a proportion of less than 50% by weight, relative to the weight-average molecular mass of the copolymer, the remainder of the copolymer being composed of at least one monomer containing more than one ethylenic unsaturation.

5. Process according to Claim 4, **characterized in that** the elastomeric polymer is composed of the monomer styrene in a proportion less than or equal to 40% by weight, relative to the weight-average molecular mass of the copolymer.

6. Process according to Claim 4 or 5, **characterized in that** the elastomeric polymer is selected from the group consisting of random styrene-butadiene copolymers with a weight-average molecular mass of between 250 000 and 600 000, linear, branched or star-shaped styrene-butadiene-styrene triblock copolymers with a weight-average molecular mass of between 50 000 and 300 000, linear styrene-isoprene-styrene triblock copolymers having a melt flow index of between 0.5 and 200, and a mixture of these copolymers.

7. Process according to any one of the preceding claims, **characterized in that** the elastomeric polymer is present in the mixture and in the premix in a proportion of between 1% and 20% by weight, relative to the total weight of the mixture and relative to the total weight of the premix.

8. Process according to Claim 7, **characterized in that** the elastomeric polymer is present in the mixture and in the premix in a proportion of between 3% and 12% by weight, relative to the total weight of the mixture and relative to the total weight of the premix.

9. Process according to any one of the preceding claims, **characterized in that** the bitumen is a pure bitumen for road use as defined by French standards NF T 65 000 and NF T 65 001.

10. Process according to any one of the preceding claims, **characterized in that** the mixture and optionally the premix are formed at a temperature of between 220 and 260°C.

11. Process according to any one of the preceding claims, **characterized in that** the premix is formed at a temperature of not more than 230°C.

12. Process according to any one of the preceding claims, **characterized in that** the reaction mixture is formed in the mixer-reactor of the turbodisintegrator type at a temperature of at least 230°C, from the premix.

13. Process according to Claim 12, **characterized in that** the reaction mixture is formed in the mixer-reactor of turbodisintegrator type at a temperature of at least 250°C, from the premix.

14. Process according to any one of the preceding claims, **characterized in that** the reaction mixture is formed in the turbodisintegrating mixer-reactor for a time sufficiently short to prevent thermal degradation of the mixture.

15. Process according to any one of the preceding claims, **characterized in that** the premixing and then the reaction mixing are carried out continuously in the mixer-reactor of turbodisintegrator type.

16. Process according to any one of the preceding claims, **characterized in that** the bitumen used for mixing with the elastomeric polymer is heated beforehand, with stirring, to a temperature between 220 and 300°C.

17. Process according to any one of the preceding claims, **characterized in that** the elastomeric polymer used for mixing with the bitumen is adjusted beforehand to a temperature between 5 and 40°C.

18. Process according to any one of the preceding claims, **characterized in that** it further comprises the step consisting in cooling the modified bitumen obtained, with stirring, to a temperature between 150 and 180°C.
